Europäisches Patentamt

European Patent Office

Office européen des brevets

(11) Publication number: **0 044 623**
**A1**

## (12) EUROPEAN PATENT APPLICATION

(21) Application number: **81302804.0**

(22) Date of filing: **22.06.81**

(51) Int. Cl.³: **F 24 D 17/00**
**F 24 D 11/00**

(30) Priority: **18.07.80 GB 8023640**

(43) Date of publication of application:
**27.01.82 Bulletin 82/4**

(84) Designated Contracting States:
**AT BE CH DE FR GB IT LI LU NL SE**

(71) Applicant: **Heron, Andrew George**
**Cuilfail Apperley Road**
**Stocksfield Northumberland(GB)**

(72) Inventor: **Heron, Andrew George**
**Cuilfail Apperley Road**
**Stocksfield Northumberland(GB)**

(74) Representative: **Gura, Henry Alan et al,**
**MEWBURN ELLIS & CO. 70 & 72 Chancery Lane**
**London WC2A 1AD(GB)**

(54) **Solar heating system.**

(57) A solar heating system for heating the water in the cold water supply tank (6) of a hot water system in a building includes one or more translucent panels (8) located in the roof (2) of the building to allow solar radiation to be transmitted into the roof void (4) of the building to heat the air contained in said void (4). A matt black panel (10) is preferably positioned in the roof void (4) adjacent the translucent panel (8) to absorb radiation incident thereon and provide a concentrated source of heat for the air in the roof void (4). Heat exchange means (12) are located in the cold water supply tank (6) and heated air from the upper regions of the roof void (4) is forced through the heat exchange means (12) to warm the water in the supply tank (6), said air then being returned to the lower regions of the void (4).

FIG. 1

EP 0 044 623 A1

- 1 -

## SOLAR HEATING SYSTEM

### TECHNICAL FIELD

This invention relates to a solar heating system and more particularly to such a system for incorporation in a building having a roof void, said building including a hot water system supplied with water from a cold water supply tank.

### BACKGROUND ART

It is now well-established practice to attempt to make use of the energy available from the sun to effect space and water heating particularly in domestic residences. For such purposes, translucent heat exchange panels are commonly incorporated in extents of the roofs of buildings on which solar radiation is incident, a heat exchange liquid, typically water or oil, being forced through tubes within said panels to be heated by the solar energy, said heated liquid then being used to effect or contribute towards the desired heating within the building.

However, the panels, as well as the substantial auxiliary equipment normally associated therewith, such as liquid supply tanks, expansion tanks, flow control valves, temperature sensors and the like, are relatively complex and therefore expensive items, while the installation of such panels, particularly into pre-erected buildings, is a complicated and expensive procedure such as often to make the use of such panels

0044623

- 2 -

uneconomical. Additionally, effective operation of the panels requires the forcing through the panels of a heat exchange liquid, with the attendant problems associated with extensive lengths of liquid-carrying tubes in roof voids.

DISCLOSURE OF THE INVENTION

According to the present invention there is provided, for installation in a building having a roof void, said building including a hot water system fed from a cold water supply tank, a solar heating system comprising one or more translucent panels for incorporation in, to form at least part of the surface of, the roof of the building, heat exchange means for location in the cold water supply tank, said heat exchange means including a passageway therethrough, and means for forcing air from the upper regions of the roof void through the passageway in the heat exchange means and thence to the lower regions of the roof void, the arrangement being such that solar radiation transmitted through the or each translucent panel heats the air within the roof void, the heated air from the upper regions of the roof void forced through the heat exchange means serving to heat the water in the supply tank, said air then being returned to the lower regions of the roof void.

In a preferred system, the or each translucent panel has associated therewith a further panel for location within the roof void to extend substantially parallel with the translucent panel whereby solar radiation transmitted through the translucent panel is incident on a surface of said further panel, said surface being matt black. Such a system maximises utilisation of the available solar radiation in that said radiation is absorbed by the matt black further panels to heat said panels and is therefore available in relatively concentrated areas to heat air in the roof void.

When installed in a tiled roof, the translucent panels may be of size and shape conforming with that of the roof tiles. Alternatively, a single translucent panel may extend over an area equivalent to that of a plurality of said roof tiles.

Conveniently the heat exchange means comprises an inlet chamber and an outlet chamber interconnected by a plurality of preferably parallel tubes whereby air forced into the inlet chamber flows to the outlet chamber along said tubes.

The system preferably includes a first length of tubing for interconnecting the upper regions of the roof void with an inlet to the heat exchange means and a further length of tubing for extending from an outlet from the heat exchange means to the lower regions of the roof void.

- 4 -

The means for forcing air through the heat exchange means conveniently comprises an electric fan which may be located to the outlet side of the heat exchange means or, alternatively, said fan may be located to the inlet side of the heat exchange means to blow air through said heat exchange means.

A preferred system incorporates a pair of temperature sensors, one for monitoring the temperature in the upper regions of the roof void and the other for monitoring the temperature of the water in the supply tank, said sensors being interconnected with the fan in such a manner that said fan is actuated only when the temperature at the one sensor is greater than the temperature at the other sensor by at least a predetermined minimum amount.

The system may include a vent for location in the roof of the building and arranged to open, thereby to vent the roof void to the outside, when the temperature in the roof void reaches a predetermined maximum value as may occur, for example, on failure of the fan or in extremely hot weather conditions. Conveniently such a vent is hydraulically-operated, relying on expansion of the hydraulic fluid to effect operation of the vent at the desired temperature.

BRIEF DESCRIPTION OF THE DRAWINGS

Fig. 1 shows schematically a solar heating system according to the invention in a roof void, and

Fig. 2 is a plan view of the heat exchange means
of the system of Fig. 1.

BEST MODE OF CARRYING OUT THE INVENTION

Referring to the drawings, there is shown part
of a building, typically a domestic residence, having
a roof 2 defining therein a roof void 4. Housed
within the roof void 4 is a cold water supply tank 6
supplying water to the hot water storage tank of a
conventional domestic hot water system.

A translucent panel 8, which may be of, for
example, clear fibreglass or wire-reinforced glass,
is located in, to form part of, an extent of the roof 2
on which solar radiation is incident, whereby said solar
radiation incident on the panel 8 is transmitted
through said panel into the roof void 4. The panel 8
may consist of a number of smaller, interconnected
translucent members and, in the case of a tiled roof,
said smaller members may each be the same size and
shape as the roof tiles whereby they can be installed
in the roof in the conventional manner of said roof
tiles. If the conventional tiles are supported on a
weatherproof lining sheet, this sheet, at least in the
region of the translucent tiles, will itself be of a
translucent material.

Located within the roof void 4 to extend substantially parallel with the panel 8 at a small distance therefrom - typically 25cms - is a flat panel 10, at least the surface of said panel 10 facing outwardly of the void 4 being matt black. The material of said panel must be capable of withstanding high temperatures - typically of the order of 100°C - and may be, for example, fibreglass cloth or a suitable plastics material.

It will be appreciated that solar radiation transmitted through the panel 8 is absorbed by the matt black panel 10 whereby said panel 10 is heated, said heat then being radiated from the panel 10 to increase the temperature of the air within the roof void 4. Further, the volume between the panels 8 and 10 is heated to substantial temperatures by virtue of reflection and re-radiation of part of the incident energy, in accordance with the 'green-house' effect. In order to make as full use as possible of the radiation transmitted into the void through the panel 8, the roof timbers and other constructional components within the void 4 are also painted matt black.

A heat exchanger indicated generally at 12 is positioned in the lower regions of the cold water supply tank 6, said exchanger comprising an inlet chamber 14 and an outlet chamber 16 interconnected by a plurality of parallel tubes 18 each communicating into both the chambers 14,16. The material of the heat exchanger is conveniently copper.

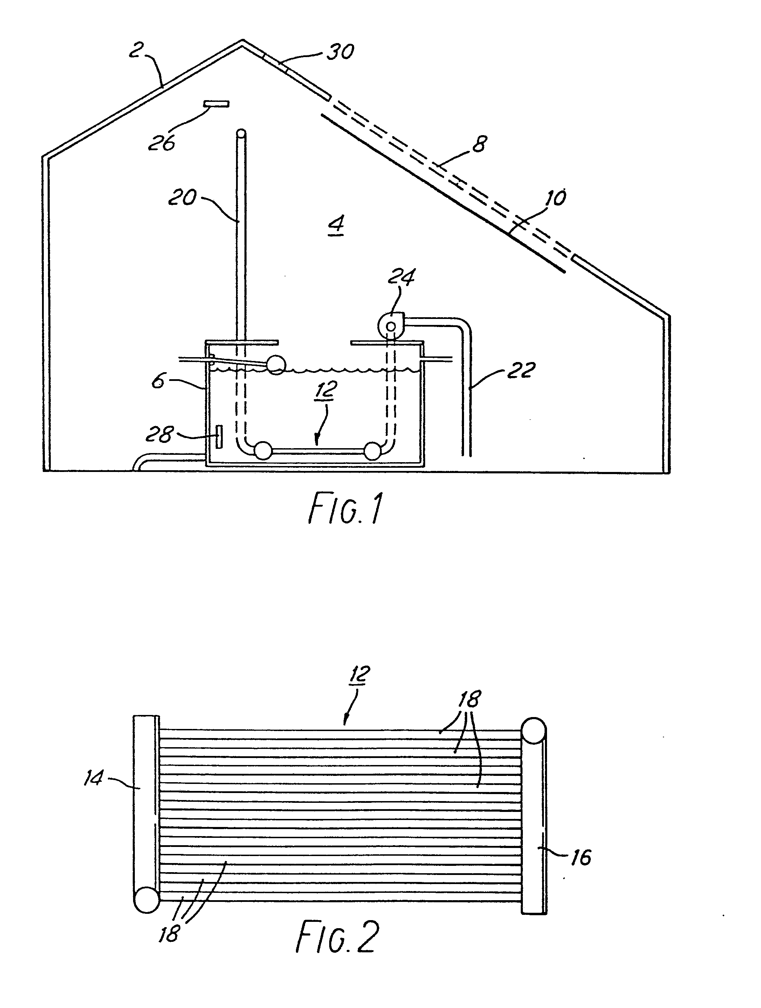

A first length of flexible reinforced plastic hose 20 extends from the upper regions of the roof void 4 to an inlet to the chamber 14, while a further length of such hose 22 extends from an outlet from the chamber 16 to the lower regions of the void 4. An electric fan 24, preferably a centrifugal blower fan, is positioned in the hose 22 outside the tank 6 as seen in Fig. 1.

On actuation of the fan 24 to draw air through the heat exchanger 12, heated air from the upper regions of the void 4 is drawn through the hose 20, through the heat exchanger 12 to be vented back into the lower regions of the roof void from the hose 22. As the heated air travels from the inlet chamber 14 to the outlet chamber 16 of the heat exchanger 12 along the parallel tubes 18, heat from the air is conducted through the walls of said tubes to heat the water in the tank 6, which tank should be well insulated, the cooled air then being drawn through the hose 22 and returned to the roof void 4.

Thus it will be appreciated that, on demand from the hot water storage tank, pre-heated water is supplied thereto from the tank 6.

The specific heat of air is so much lower than that of liquids, such as water, that air has not normally been considered an economical heat transferring medium. However, the substantial volume of air within a typical, well-insulated roof void, once heated in the manner detailed above, has a very high calorific value. The fan 24 can be arranged to pump air through the illustrated system incorporating hose of typically 8cms diameter at a typical rate of between 150 and 300 metres per minute, this high rate of flow being accommodated in the heat exchanger 12 by virtue of the many tubes 18 interconnecting the inlet and outlet chambers 14,16, which tubes are typically between 3cms and 5cms in diameter.

Temperatures in the roof void in excess of $60^{\circ}C$ can readily be achieved even in the North of England in May, and up to 10 kilowatts of energy per day supplied to the water in the tank 6, which water can be heated to a temperature of the order of $40^{\circ}C$.

Thus it will be appreciated that large volumes of warm water can be provided by means of the system of the invention - conveniently the tanks 6 are of the order of 300 to 450 litres in capacity.

If preferred, two or more smaller tanks 6 may be used, each typically of 225 litre capacity, there being one or more fans 24 associated with each tank 6. As mentioned above, the tank(s) 6 should be well insulated so that the heated water therein can retain its heat content overnight.

In a preferred system, a pair of temperature sensors 26,28 are provided, one in the upper regions of the roof void 4 and one in the supply tank 6, said sensors being linked to the fan 24 in such a manner that said fan is actuated only when the temperature at the sensor 26 is greater than the temperature at the sensor 28 by at least a predetermined minimum amount, typically at least $3^{o}C$ to $4^{o}C$.

Should the fan 24 fail or should the external weather conditions be extreme, the temperature in the roof void may rise to unacceptable levels. A vent 30 may therefore be provided in the roof, said vent being arranged to open when the temperature in the roof void reaches a predetermined maximum allowable value. Conveniently the vent is hydraulically operated, relying on expansion of the hydraulic fluid of the actuating mechanism to operate the vent at the desired temperature.

Although the fan 24 is shown to the outlet side of the heat exchanger 12 and therefore draws cooled air therethrough, which air serves to cool the fan 24, said fan may be located in the hose 20 to the inlet side of the exchanger 12 to force, rather than draw, air through said exchanger.

Clearly the system of the invention has application in industrial as well as domestic situations, while the rates of air flow and associated specifications can be chosen to suit particular requirements. However, in all systems, it will be appreciated that a substantial amount of heat energy is available at very little cost, while the relative simplicity of the system enables it to be readily incorporated in existing or in new buildings without the necessity for much structural alteration to the basic building.

- 11 -

CLAIMS

1. For installation in a building having a roof void (4), said building including a hot water system fed from a cold water supply tank (6), a solar heating system comprising one or more translucent panels (8) for incorporation in, to form at least part of the surface of, the roof (2) of the building, characterised by heat exchange means (12) for location in the cold water supply tank (6), said heat exchange means (12) including a passageway (14,18,16) therethrough, and means (24) for forcing air from the upper regions of the roof void (4) through the passageway (14,18,16) in the heat exchange means (12) and thence to the lower regions of the roof void (4), the arrangement being such that solar radiation transmitted through the or each translucent panel (8) heats the air within the roof void (4), the heated air from the upper regions of the roof void (4) forced through the heat exchange means (12) serving to heat the water in the supply tank (6), said air then being returned to the lower regions of the roof void (4).

2. A solar heating system as claimed in claim 1 in which the or each translucent panel (8) has associated therewith a further panel (10) for location within the roof void (4) to extend substantially parallel with the translucent panel (8) whereby solar radiation transmitted through the translucent panel (8) is incident on a surface of said further panel (10), said surface being matt black.

3.  A solar heating system as claimed in claim 1 or claim 2 for installation in a building having a tiled roof (2), the translucent panels (8) being of a configuration conforming with that of the roof tiles.

4.  A solar heating system as claimed in claim 1 or claim 2 for installation in a building having a tiled roof (2), the or each translucent panel (8) extending over an area equivalent to that of a plurality of roof tiles.

5.  A solar heating system as claimed in any one of claims 1 to 4 in which the heat exchange means (12) comprises an inlet chamber (14) and an outlet chamber (16) interconnected by a plurality of parallel tubes (18) whereby air forced into the inlet chamber (14) flows to the outlet chamber (16) along said tubes (18).

6.  A solar heating system as claimed in any one of claims 1 to 5 and including a first length of tubing (20) for interconnecting the upper regions of the roof void (4) with an inlet to the heat exchange means (12) and a further length of tubing (22) for extending from an outlet from the heat exchange means (12) to the lower regions of the roof void (4).

7.  A solar heating system as claimed in claim 6 in which the means for forcing air through the heat exchange means (12) comprises an electric fan (24).

8.  A solar heating system as claimed in claim 7 and incorporating a pair of temperature sensors (26,28), one for monitoring the temperature in the upper regions of the roof void (4) and the other for monitoring the temperature of the water in the supply tank (6), said sensors (26,28) being interconnected with the fan (24) in such a manner that said fan (24) is actuated only when the temperature at the one sensor (26) is greater than the temperature at the other sensor (28) by at least a predetermined minimum amount.

9.  A solar heating system as claimed in any one of claims 1 to 8 and including a vent (30) for location in the roof (2) of the building and arranged to open, thereby to vent the roof void (4) to the outside, when the temperature in the roof void (4) reaches a predetermined maximum value.

10.  A solar heating system as claimed in claim 9 in which the vent (30) is hydraulically operated.

FIG.1

FIG.2

0044623

European Patent
Office

**EUROPEAN SEARCH REPORT**

Application number

EP 81 30 2804

| Category | Citation of document with indication, where appropriate, of relevant passages | Relevant to claim |
|---|---|---|
| | US - A - 4 098 262 (PETERS)<br>* Column 2, lines 50-68 figure: 5 * | 1,2 |
| | US - A - 4 051 999 (GRANGER)<br>* Column 2, lines 35-52; column 3, lines 21-50; figures 1,3 * | 1,2,6 |
| | FR - A - 2 316 554 (BONING)<br>* Page 4, line 3 - page 5, line 9; figures 6,7 * | 1 |
| | US - A - 4 103 825 (ZORNIG)<br>* Column 2, lines 51-55 * | 7 |
| | US - A - 4 150 785 (BRISCOE)<br>* Column 3, line 40 - column 4, line 6; figures 5-7 *. | 9,10 |
| | FR - A - 2 391 430 (DE CAVEL)<br>* Claims 1,3,4,10 * | 3,4 |
| | FR - A - 2 266 121 (SVENSKA FLAKTFABRIKEN)<br>* Claims 1,5 * | 1,2,7 |

**DOCUMENTS CONSIDERED TO BE RELEVANT**

CLASSIFICATION OF THE APPLICATION (Int. Cl.³)

F 24 D 17/00
11/00

TECHNICAL FIELDS SEARCHED (Int. Cl.³)

F 24 D
F 24 J

CATEGORY OF CITED DOCUMENTS

X: particularly relevant
A: technological background
O: non-written disclosure
P: intermediate document
T: theory or principle underlying the invention
E: conflicting application
D: document cited in the application
L: citation for other reasons

&: member of the same patent family, corresponding document

The present search report has been drawn up for all claims

| Place of search | Date of completion of the search | Examiner |
|---|---|---|
| The Hague | 22-09-1981 | VAN GESTEL |

EPO Form 1503.1 06.78